# EUROPEAN PATENT APPLICATION

(11) **EP 1 447 753 A1**
(43) Date of publication of application: **18.08.2004**
(21) Application number: 02755666.1
(22) Date of filing: 26.07.2002
(51) Int. Cl.: G06F 17/21

(54) **ONLINE DOCUMENT CORRECTION SYSTEM USING THE WEB SERVER TECHNIQUE**

(30) Priority: 26.07.2001 JP 2001258769
(71) Applicant: Ycomm Co., Ltd., Yokohama-shi, Kanagawa-ken (JP)
(72) Inventor: SAITOU, Shinichi, Mitaka-shi, Tokyo 181-0016 (JP); MIYAKE, Hidenori, Niiza-shi, Saitama 352-0012 (JP); ITOU, Tsutomu, Takaharu-cho Nishimorogata-gun, Miyazaki (JP)
(74) Representative: Slingsby, Philip Roy
(86) International application number: PCT/JP2002/007604
(87) International publication number: WO 2003/010683

(57) **Abstract**

The present invention is to solve problems such as a longer working period because of requirements for lot of working processes, use of a lot of sheets in the course of repeated proofreading work by multiple proofreaders, occurrence of errors in proofreading or retrogressive work, and delayed deliveries due to difficulties in managing proofreading work accurately. It also makes it possible to reduce the number of processes to create multiple documents containing a common sentence(s) and the number of processes to revise the sentence(s) containing the common sentence(s).

An online proofreading system using Web server technology is constructed to enable proofreading work from a Web browser. Further, such a system is developed as to perform proofreading history management and proofreading schedule management using a proofreading server so that each proofreader can confirm the contents of proofreading or proofreading status in real time from the Web browser but cannot revise or delete proofreading comments from the other proofreaders.

A document preparation supporting system using database technology is constructed to enable document structure management and document module management of created documents. Further, such a system is developed as to make a common sentence(s) used in multiple documents shared as a sentence module so that the creation of the documents containing the common sentence(s) and the revision of the sentence(s) can be performed securely and efficiently.

## Description

### TECHNICAL FIELD

The present invention relates to document preparation support and proofreading work (e.g., manual preparation support and proofreading work) in printing, using a management technique for modularizing document files to support the preparation of a document, and a proofreading system that makes full use of Web server technology to do proofreading work against conventional proofreading on paper.

### BACKGROUND ART

In document proofreading work (e.g., manual proofreading work), a document to be proofread is printed out on proof paper and sent to a proofreading department by fax or mail. In the proofreading department, the proof sheets are passed around to persons in charge so that they will write proofreading results on the proof sheets, thus conveying proofread contents. This proofreading work requires many workers and much time. Further, since correction contents are often instructed by telephone or fax, it is extremely difficult to accurately keep track of a proofreading history such as to who instructs the proofreading results. In addition, since each of multiple persons in charge reads proofs of each assigned section and passes them around from hand to hand, the contents proofread by anyone else can be rewritten or deleted. It causes a problem of proofreading data protection. In progress management, a proofreading manager makes a confirmation to each proofreader also by telephone or fax. Therefore, it is also difficult to keep track of proofreading task status.

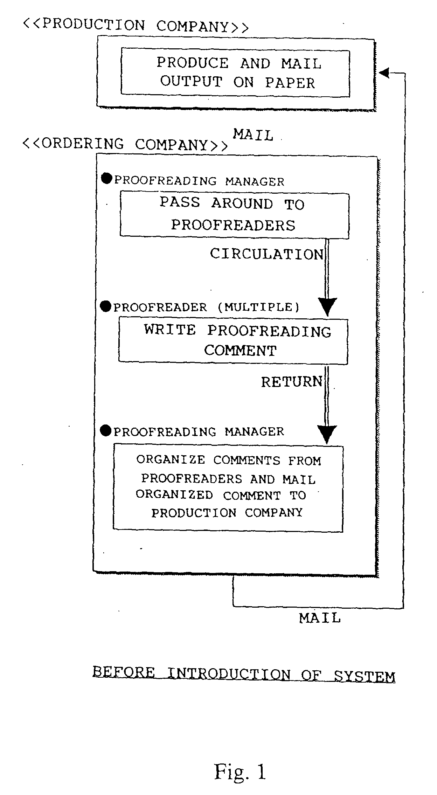

As shown in Fig. 1, a manuscript printed on paper is conventionally sent by mail or fax from a document production company (hereinbelow called a production company) to a proofreading manager. The proofreading manager passes the received manuscript around to proofreaders. Each person in charge writes a proofreading comment by hand on proof paper circulated, and eventually returns it back to the proofreading manager. The proofreading manager confirms and revises all the comments, and sends the results to the production company by mail or the like, thus doing proofreading.

### DISCLOSURE OF THE INVENTION

However, actual proofreading work requires a lot of working processes at both ordering and order-receiving companies, and hence a long working period. Under the circumstances, document production (e.g., manual production) tends not to catch up with product sales.

The actual proofreading work also causes other problems to solve, such as use of a lot of sheets because of repeated distribution of copies of a manuscript to multiple proofreaders, occurrence of retrogressive work due to difficulties in organizing the proofreading history, delayed deliveries because of insufficient management of the task progress, and induction of errors due to misinstructions to the proofreading manuscript.

To solve the above-mentioned problems, the present invention provides an online proofreading system capable of concurrent proofreading work by multiple operators using Web server technology. The proofreading system can manage proofreading schedule and history and confirm proofreading status on a Web server (hereinbelow called a proofreading server) using a proper description language, for example, Hyper Text Markup Language (hereinbelow called HTML), and provide four levels of permission adding functions to manage each user. The functions include (1) an administrator function (system management, user management, and database management), (2) a project leader function (registration of the proofreading schedule for proofreading work, final proofreading approval, proofreading comment editing), (3) a director function (proofreading work and proofreading completion processing), and (4) a production function (proofreading confirmation).

It is preferable that the proofreading system also has a bulletin board for exchanging proofreading information on the proofreading server and an automatic e-mail delivery function.

It is further preferable that the proofreading system further has a character proofreading function for doing proofreading by dragging a string of characters on a Web browser, an additional information function for doing proofreading by specifying a proofreading-required area on the Web browser, and an image proofreading function for proofreading a proofreading-required image on the Web browser.

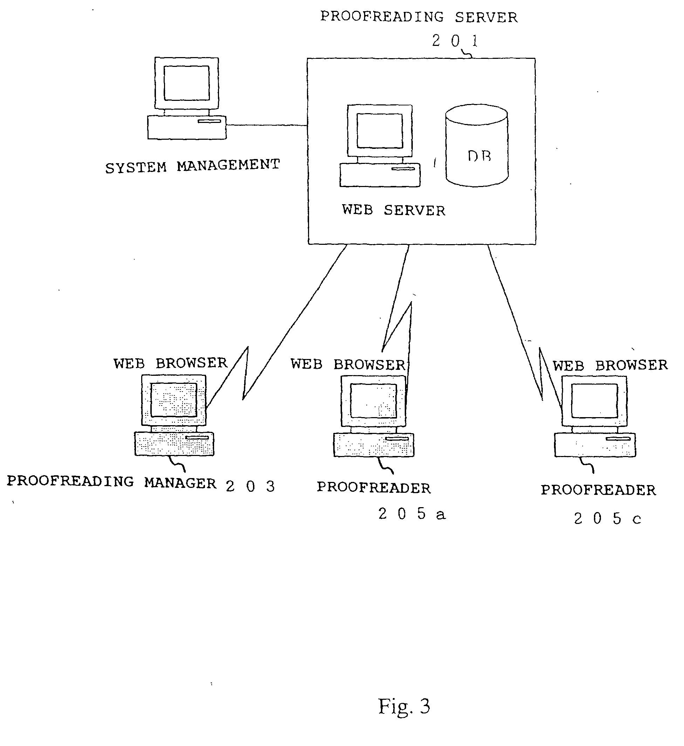

A proofreading document is created in a proper description language, rather than on paper, as a shared document on the Web server. Proofreading users on an intranet or the Internet provide proofreading instructions to a shared description language file on the proofreading server so that only the proofreading contents will be reflected in a database on the proofreading server. Thus, simultaneous proofreading can be done by multiple proofreaders without using printed proof sheets (Fig. 3)

The user management is carried out on the proofreading server to protect data such as to prohibit users other than the one who provided a proofreading instruction from erasing the contents of the proofreading instruction, thereby preventing the occurrence of trouble or the like due to different instructions exchanged among the proofreaders. The progress management and the history management can also be carried out on the proofreading server by using databases on the proofreading server.

The first invention provides an online document proofreading system capable of concurrent proofreading work by multiple operators using Web server technology, characterized by comprising means for storing and releasing on a server a document to be proofread, means for managing information related to the proofreading work, means for releasing proofreading status in response to a request from a registered user, and means for providing plural levels of access permission to assign a predetermined level of access permission to each registered user.

It is preferable that the document proofreading system also comprises an electronic bulletin board for allowing the registered users to exchange proofreading information, and means for automatically delivering e-mail.

The document proofreading system is also characterized by further comprising character proofreading means for doing proofreading by dragging a string of proofreading-required characters, additional information means for doing proofreading by specifying a proofreading-required area, and image proofreading means for proofreading a proofreading-required image.

The second invention provides a document preparation supporting system characterized by comprising document structure storing means for storing the document structure of each document file, sentence module storing means for storing sentences used in the document file, and means for associating the sentence module storing means with the document structure storing means.

The third invention provides an electronic proofreading system characterized by comprising means for managing a project divided by items in its table of contents as proofreading data (the project refers to a manual or book to be produced here) and sending a proofreader the proofreading data for a selected item, and means for making the proofreading data for the item read only for the proofreader when receiving a signal indicating proofreader's confirmation from the proofreader.

It is preferable that the electronic proofreading system further comprises means for making the project read only for the proofreader when receiving a signal indicating the completion of proofreading from the proofreader.

It is also preferable that the electronic proofreading system further comprises means for making the proofreading data for the item read only for all users when receiving a signal indicating PL approval from a proofreading leader and thus performing an exchange of information in units of items in the table of contents.

The fourth invention provides a data conversion system characterized by comprising means for creating a proofreading file and table of contents data from a document file created under the direction of a document preparation supporting system, means for storing the proofreading file in a predetermined location, and means for storing the table of contents data in a table of contents database.

### BRIEF DESCRIPTION OF THE DRAWINGS

Fig. 1 is a work flowchart before the introduction of a proofreading system.
Fig. 2 is a work flowchart after the introduction of the proofreading system.
Fig. 3 is a conceptual illustration of the proofreading system.
Fig. 4 shows a notice and message screen of a forum.
Fig. 5 shows a proofreading status screen of the forum.
Fig. 6 shows a user status screen of the forum.
Fig. 7 is an illustration of the frame proofreading of a proofreading screen.
Fig. 8 is an illustration of various buttons in a button frame and a bulletin board for proofreading comments.
Fig. 9 is an illustration of proofreading status on the proofreading screen.
Fig. 10 is an illustration of a check-on function in the button frame.
Fig. 11 is an illustration before input of a proofreading comment through a character proofreading function.
Fig. 12 is an illustration after input of the proofreading comment through the character proofreading function.
Fig. 13 is an illustration before input of a proofreading comment through an additional information function.

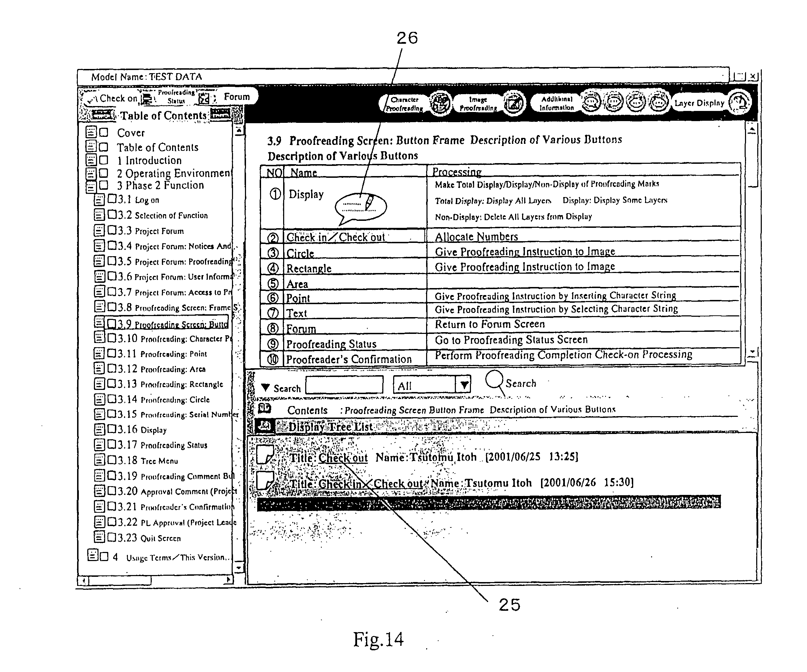

Fig. 14 is an illustration after input of the proofreading comment through the additional information function.
Fig. 15 is an illustration before input of a proofreading comment through an image proofreading function.
Fig. 16 is an illustration after input of the proofreading comment through the image proofreading function.
Fig. 17 is a diagram showing the general structure of a second embodiment of the present invention.
Fig. 18 is a diagram for explaining a document preparation supporting system.
Fig. 19 is a diagram for explaining the document preparation supporting system.
Fig. 20 is a diagram for explaining an electronic proofreading system.
Fig. 21 is the first operational flowchart for explaining the electronic proofreading system.
Fig. 22 is the second operational flowchart for explaining the electronic proofreading system.
Fig. 23 is the third operational flowchart for explaining the electronic proofreading system.
Fig. 24 is the fourth operational flowchart for explaining the electronic proofreading system.
Fig. 25 is an operational flowchart of the document preparation system and the electronic proofreading system.

### BEST MODES FOR CARRYING OUT THE INVENTION

Preferred embodiments will be described below.

### (1) First Embodiment

In the first embodiment of the present invention, a proofreading system uses an intranet or the Internet to do proofreading work in which multiple proofreaders are involved across multiple companies so that simultaneous proofreading by multiple people, progress management, and history management can be done efficiently.

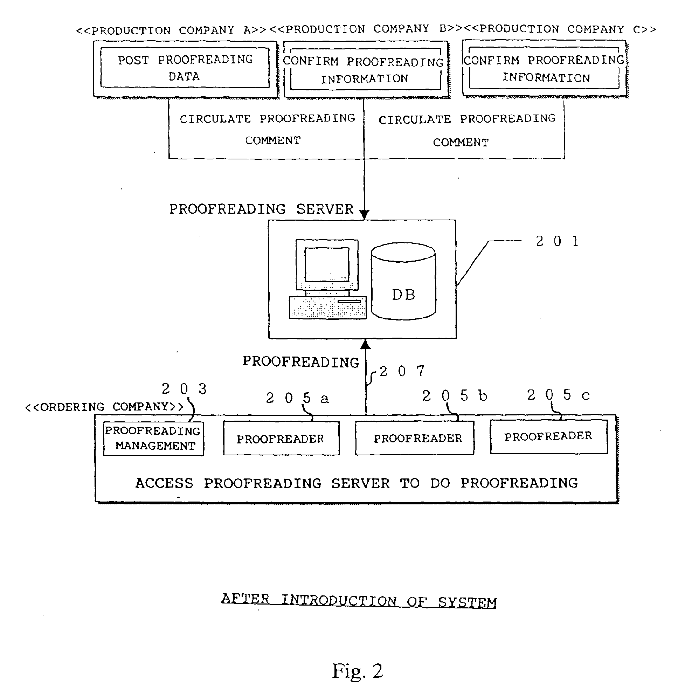

Fig. 2 is a diagram of the general structure of the proofreading system according to the embodiment of the present invention. In the system, proofreading data 207 is posted on a proofreading server 201 so that terminals for proofreaders (hereinbelow called proofreaders 205a to 205c) and a terminal for a proofreading manager (hereinbelow called a proofreading manager 203) can provide proofreading instructions by reference to the same data. The proofreading data 207 are all managed in the proofreading server 201 (constituted of a Web server and a database server) so that any user on the intranet/Internet can access the proofreading server 201 through a Web browser to do proofreading. This eliminates the need to do such work as to produce output on paper, mail and circulate the output as required before.

To do proofreading, the proofreading manager 203 needs to register document information related to a proofreading document, the names of proofreaders, and a proofreading schedule in the database. The registered information is delivered to the proofreaders 205a to 205c by e-mail. Upon completion of the registration by the proofreading manager 203, proofreading of the proofreading document can start. In the proofreading system, four levels of user permissions, namely an administrator (system manager), a project leader (proofreading manager), directors (proofreaders), and production (producer) are set.

To do proofreading, the proofreading manager 203 needs to register a document to be proofread. The proofreading manager 203 logs on to the proofreading server 201 to perform the registration of document information (such as document name, prototype name, and part number), the registration of proofreaders, and the registration of a proofreading schedule. This is called project registration. Upon completion of the project registration, each of the proofreaders 205a to 205c is allowed to do proofreading. The information registered by the proofreading manager 203 is automatically delivered by e-mail from the proofreading server 201 to each of the proofreaders 205a to 205c. The e-mail carries information on a URL of the proofreading server 201 (address to access the proofreading server 201) in which proofreading data are registered, the proofreading schedule, and so on. It allows the proofreaders 205a to 205c to start proofreading work. Since the data registered here are stored on the proofreading server 201 on a project basis (where a project is a document to be proofread), each of the proofreaders 205a to 205c can do proofreading wok on a project in which the proofreader is registered.

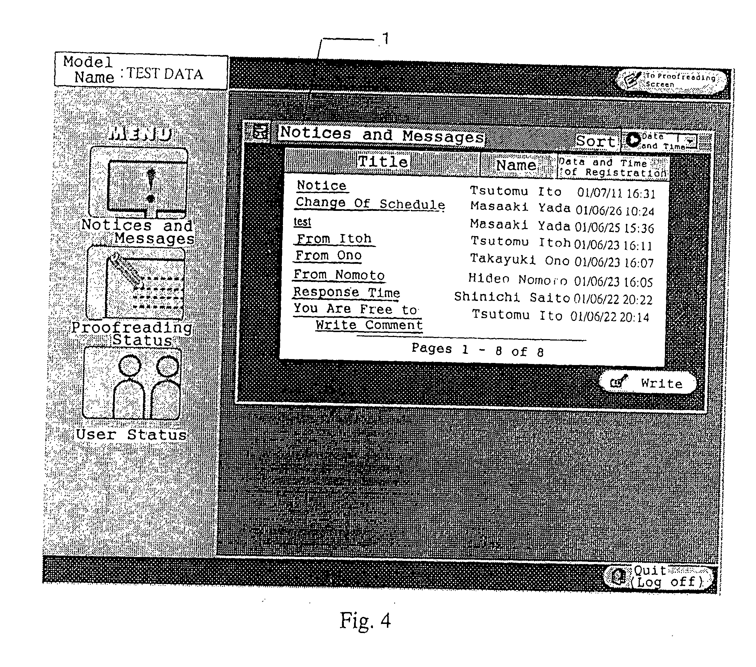

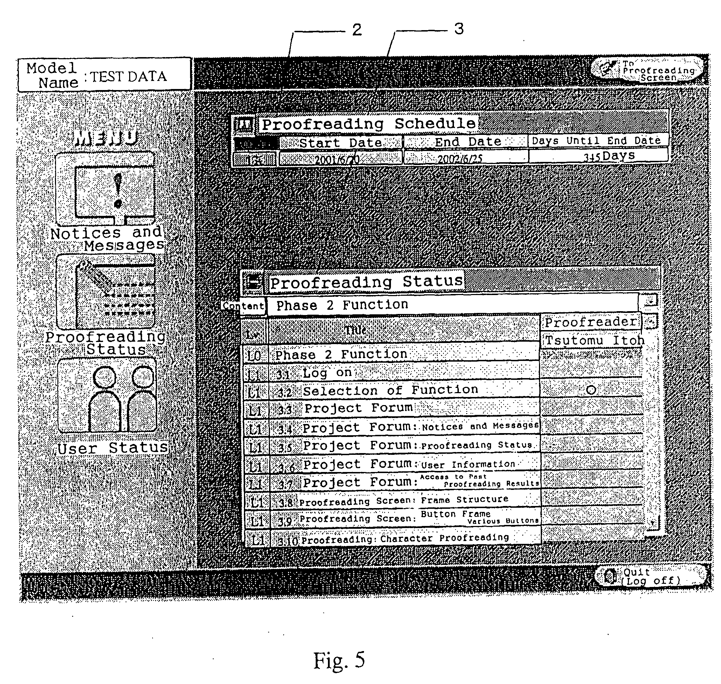

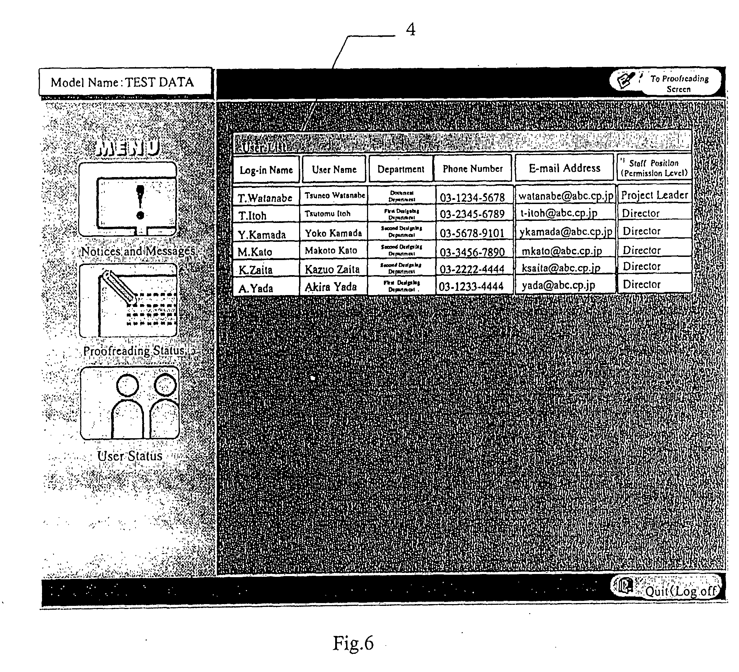

A forum is provided as a place where the proofreaders 205a to 205c can exchange information, communicate with each other, and grasp proofreading status of each proofreader. All or some of the proofreaders 205a to 205c who have received by e-mail a registration notification from the proofreading manager 203 access a site constructed in the proofreading server 201. The proofreading server 201 confirms user names and passwords to permit the proofreaders to log on only when they match with the user information registered in the proofreading server 201. Each of the proofreaders who have succeeded to log on to the proofreading server 201 selects a project as a first step. Since there is a case where a proofreader carries multiple proofreading tasks, the proofreading server 201 extracts proofreading task information for each proofreader, and displays a list of incomplete proofreading tasks on a category basis to let the proofreader select a proofreading-required project. In this project selection, two or more projects cannot be selected at a time. After completion of the project selection, the proofreader confirms the presence or absence of other proofreaders currently logged on, and goes to the forum. Fig. 4 shows a forum screen. In the forum, a bulletin board on which information is shared among all users registered for the project can be used (notice and message bulletin board 1 in Fig. 4). In addition, the proofreading schedule 2 and the proofreading status 3 in Fig. 5, and information on all the users registered for the project (user status 4 in Fig. 6) can be confirmed.

Comments on the notice and message bulletin board 1 for use in delivering information to all the users (such as the proofreading manager and the proofreaders) registered for the project are sent to the proofreading server 201, and automatically delivered by e-mail from the proofreading server 201 to all the users registered for the project. Therefore, any omission in the transmission of information can be prevented to make it possible to share the information among all the users.

As shown in Fig. 5, a proofreading schedule registered by the proofreading manager is displayed in the proofreading schedule 2 of the forum, that is, start and end dates of proofreading, and the number of days remaining until the end date are displayed for each proofreading project. The proofreading data and the proofreading schedule 2 are associated with each other, and when it reaches the end date of proofreading, the proofreading server 201 makes the proofreading data write protected to disable any proofreading work. In the proofreading status 3 of the forum of Fig. 5, the status of how each proofreader completes proofreading can be confirmed. There exist a list of chapter and section titles and a list of proofreaders so that the lists can be switched and confirmed. In the table, a part whose checkbox is marked with a circle indicates that proofreading in the part has already been checked on, while the other parts with no marks indicate that proofreading in those parts has not been checked on yet. The proofreading-checked on operation is done by each proofreader on the proofreading screen, and the information is reflected in the proofreading status 3 of the forum. The proofreading server 201 has a database for managing the proofreading check information on a user basis so that the status checked on the proofreading screen will be reflected in the proofreading status 3. The proofreading manager confirms the proofreading status 3, thereby grasping the progress of proofreading by each proofreader at a glance.

As shown in Fig. 6, detail information on all the users involved in the project can be confirmed in the user status 4 of the forum. That is, log-in names, proofreaders' names, departments, phone numbers, e-mail addresses, permission levels (Project leader, Director, Production), and the like of all the users can be confirmed. Proofreading is done using three kinds of proofreading instructions: character proofreading, additional information, and image proofreading.

### <Embodiment>

The embodiment using the proofreading system will be described with reference to the accompanying drawings. To do proofreading of a general-purpose personal computer operating manual (hereinbelow called a document) in the proofreading system, the proofreading manager needs to register a project (document to be proofread) in the proofreading server 201. The proofreading manager accesses the proofreading server 201 to register information on the proofreading document (model name, prototype name, part number, or the like), the proofreaders, and the proofreading schedule 2. The information registered is automatically delivered by e-mail to all the users involved in the project, thus informing them that the project has started.

When starting proofreading, each proofreader has to log on to the proofreading server 201. Each proofreader launches a Web browser on each client PC to access and log on to the proofreading server 201. After logging on, each of the proofreaders 205a to 205c selects a project and a language to be proofread. Then, after going through user authentication steps, the proofreader goes to the forum screen of the project.

In the forum, the above-mentioned various kinds of information (notice and message bulletin board 1, proofreading schedule 2, proofreading status 3, user status 4, and the like) can be confirmed. The proofreader confirms these kinds of information and advances to the process to proofreading the document.

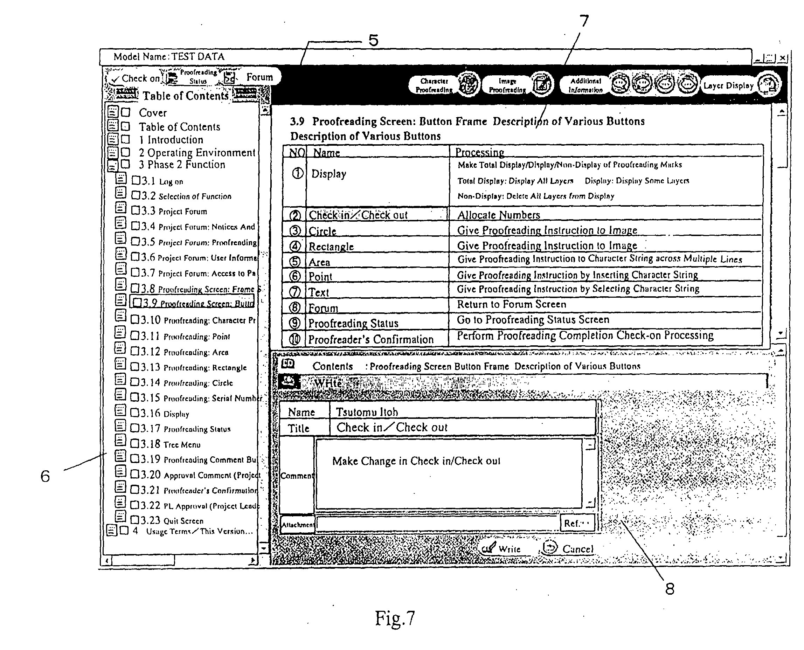

The frame structure of the proofreading screen will be described using Fig. 7. The proofreading screen is composed of a button frame 5, a table of contents frame 6, a text frame 7, and a bulletin board frame 8.

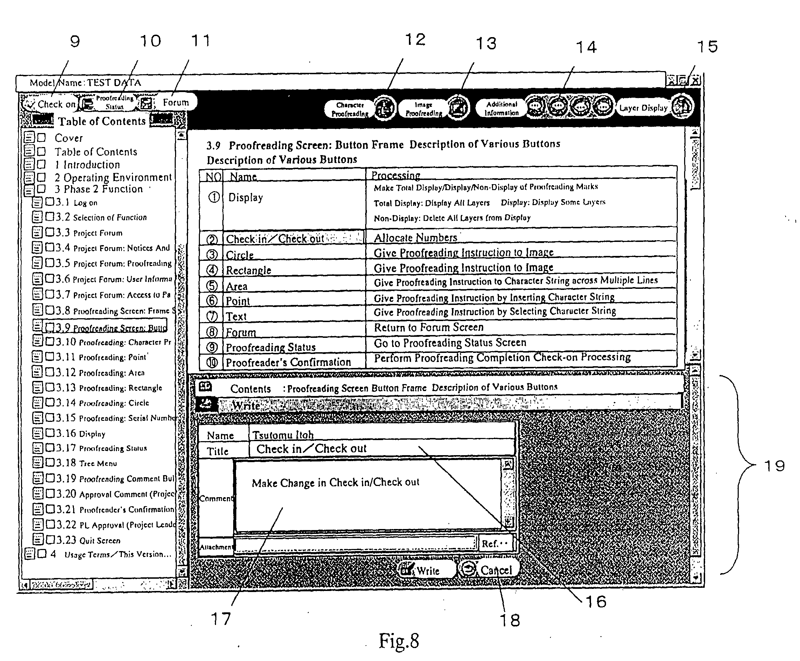

As shown in Fig. 8, a check-on button 9, a proofreading status button 10, a forum button 11, a character proofreading button 12, an image proofreading button 13, additional information buttons 14, and a layer display/non-display button 15 are arranged in the button frame 5. These buttons perform various functions as described later. In the table of contents frame 6, the table of contents of the proofreading document is displayed in a tree structure, and linked to the text (proofreading document). The proofreading document is displayed in the text frame 7. Each proofreader does proofreading of the document displayed in the text frame 7. In the bulletin board frame 8, a proofreading comment bulletin board 21 for writing proofreading comments 17 is displayed. The proofreading comments 17 are all inputted onto the proofreading bulletin board 21.

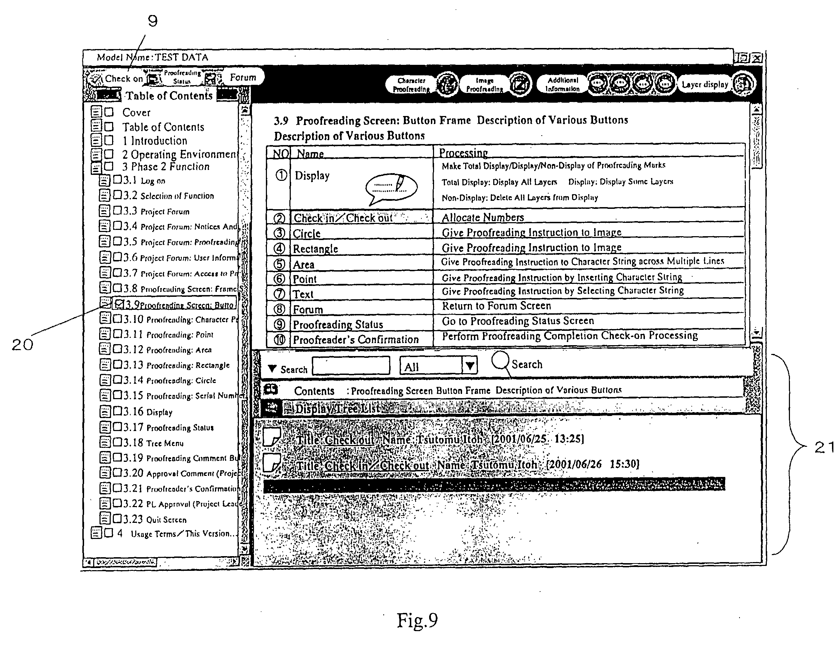

The following describes the function of each button arranged in the button frame 5. The check-on button 9 is a button for use in expressing proofreader's intention to finish a proofreading task. In other words, the check-on button is to send proofreading confirmation to the system server. Each proofreader can mark checkboxes 20 on a chapter (or section) basis (Fig. 9). Clicking the check-on button 9 with a checkbox 20 marked means the completion of proofreading in the chapter (or section). Once a chapter (or section) is checked on, the chapter (or section) can only be browsed with no chance to make an addition or change such as the registration and deletion of a new proofreading comment. The information checked-on is reflected in the proofreading status 3 in connection with each of the proofreaders 205a to 205c, so that the proofreading manager 203 can grasp the status of proofreading work done by each proofreader.

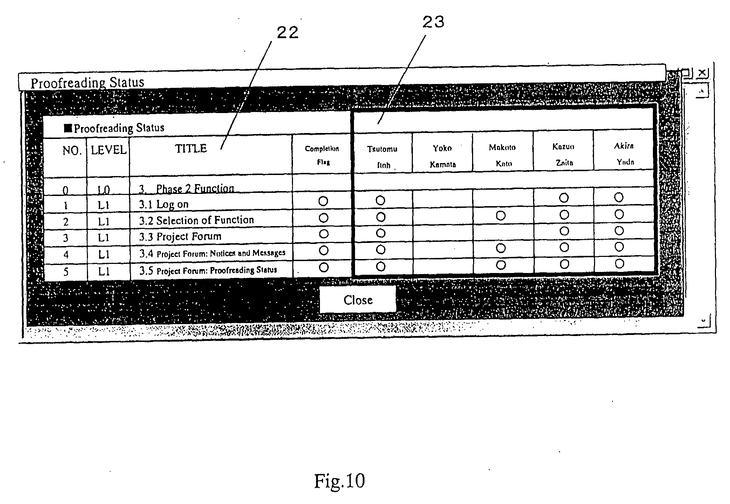

The proofreading status button 10 enables confirmation of the check-on status of each proofreader in a list form. In other words, as shown in Fig. 10, when the proofreading status button 10 is clicked, a list with chapter (or section) titles 22 in the column and proofreaders' names in the row is displayed to make it possible to enable confirmation of a task status 23.

The forum button 11 in Fig. 8 is used for transition from the proofreading screen (Fig. 8) to the forum screen (Fig. 4). Clicking the forum button 11 makes the transition to the forum.

Proofreading instructions to the document can be provided using three kinds of instructions: character proofreading, additional information, and image proofreading.

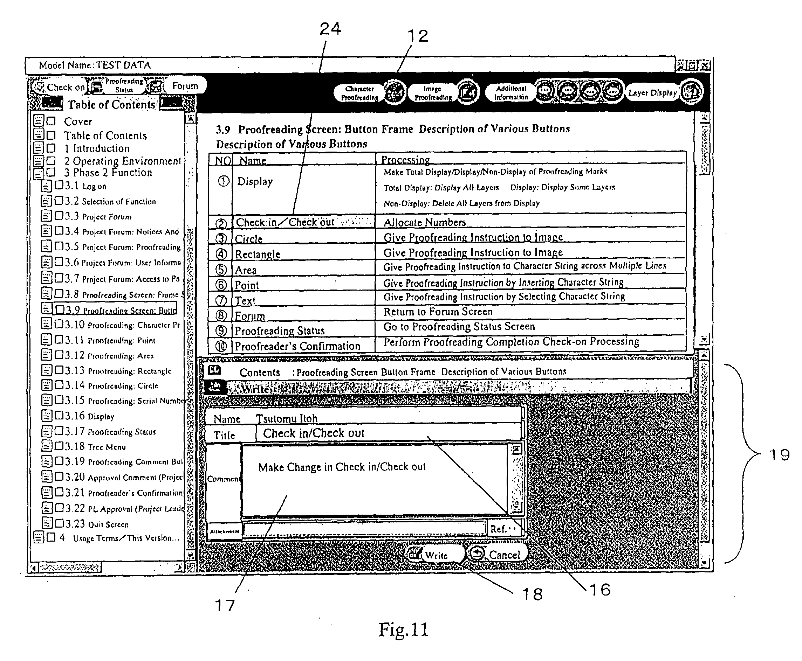

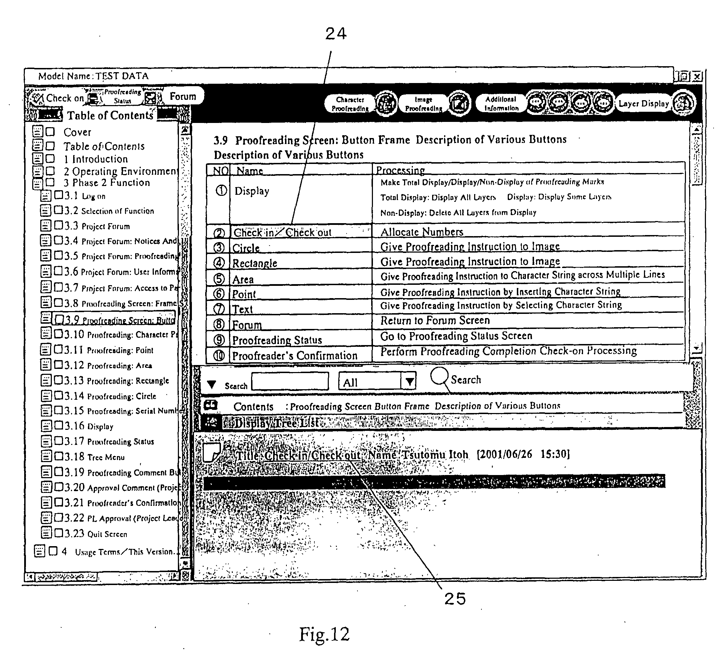

Referring next to Fig. 11, a description will be made of the character proofreading function. The function is used to give a proofreading instruction to a character string (characters). When a string of characters to be proofreading-instructed is selected (dragged) with a mouse, and the character proofreading button 12 is clicked, the length (byte) of the selected character string and the length from the head of the text to the beginning of the selected character string are acquired to decide a position to which a style sheet and an anchor tag are applied 24. The selected character string is extracted from the pointed position, and a value is set as a proofreading title 16 of a proofreading comment input form 19. After completion of writing a proofreading comment 17, a write button 18 is clicked. By clicking the write button 18, data is sent to and stored in the proofreading server 201. As shown in Fig. 12, the title 25 of the written proofreading comment 17 and the character string 24 acquired by the selection are automatically linked with each other, so that either the character string 24 in the text or the tile 25 of the proofreading comment 17 can be selected to confirm the proofreading comment 17.

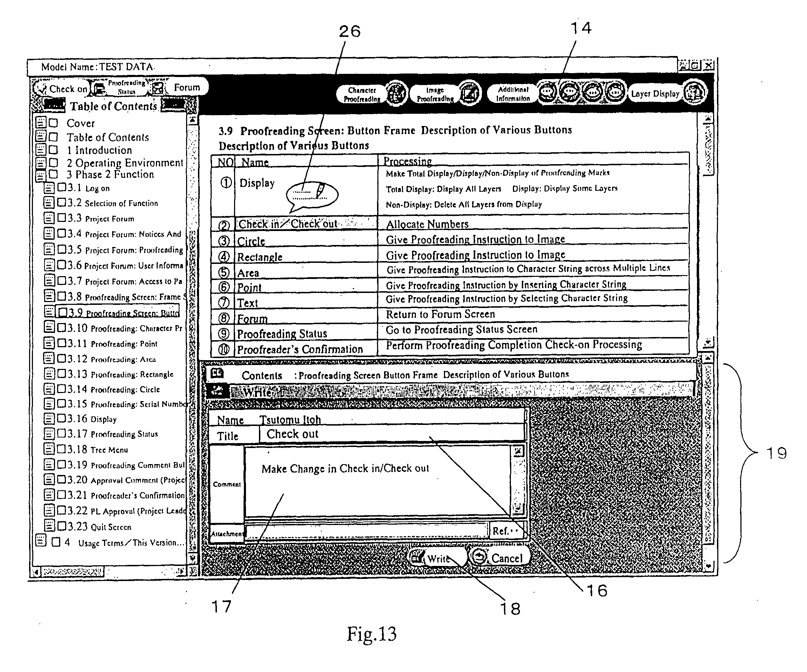

Referring next to Fig. 13, a description will be made of the additional information function. The function is used to instruct insertion of a character string, area specification, or proofreading in a place where no character string exists. A mark [hereinbelow called a balloon 26] for pointing in one of four directions is prepared for the additional information. The balloon 26 can be generated by clicking each button. That is, the balloon 26 is generated by clicking one of the additional information buttons 14. The balloon 26 generated can be moved by pointing with a mouse cursor at the balloon 26, clicking a mouse button, and dragging the mouse. The user drags and drops the balloon 26 at a place where the user gives a proofreading instruction. Since the additional information buttons 14 are synchronized with the proofreading comment bulletin board 21, the proofreading comment input form 19 is displayed by clicking any additional information button 14. The user fills in the proofreading title 16 and proofreading comment 17 sections, and clicks the write button 18. A link of the title 25 of the written proofreading comment to the balloon 26 of the additional information is automatically set, so that either the balloon 26 of the additional information in Fig. 4 or the title 25 of the proofreading comment can be clicked to confirm the proofreading comment 17.

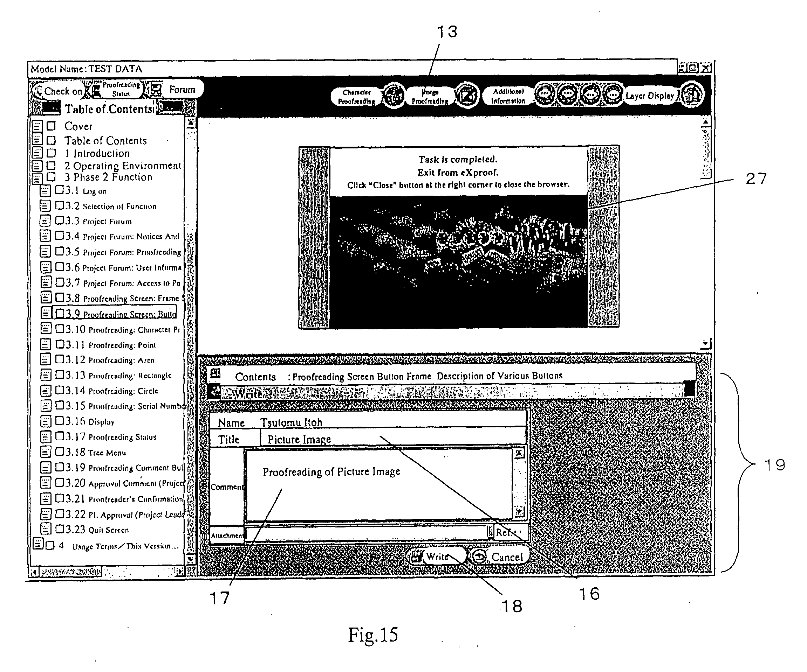

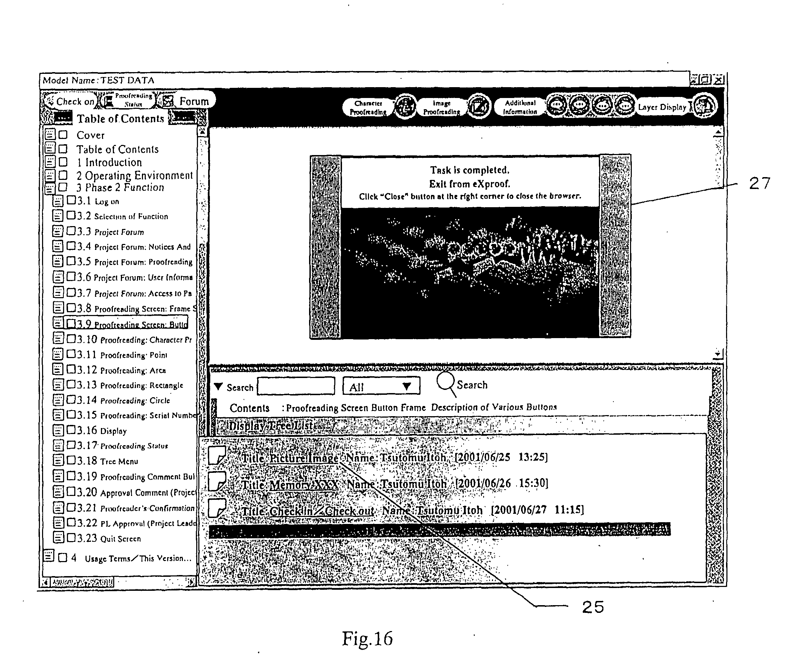

Referring next to Fig. 15, a description will be made of the image proofreading function. The function is used to give a proofreading instruction to an image. At first, the mouse cursor is moved onto an image 27 to be proofread. Then, since a message "Right-click at the image and select copy" is displayed, the user follows this instruction to copy image data onto a clipboard. After that, the user clicks the image proofreading button 13 to get tools with image editing capabilities up and running. The image data copied on the clipboard is displayed on the image proofreading screen. Proofreading of the data copied on the clipboard is done with the image editing tools. Since the image is displayed, the user uses the image editing tools to perform proofreading processing on the image. Further, since there is a proofreading comment space in the image editing tools, the user enters a specific proofreading comment 17. Then the user clicks a save button of the image editing tools to store the comment and the image data on the proofreading comment bulletin board 21. As shown in Fig. 16, the proofread image is applied with a blue frame, so it is easy to understand that'the image is proofread. Here, either the image 27 with the blue frame or the title 25 of the proofreading comment can be clicked to confirm the proofreading comment 17 and the image.

The position information on the character string 24 acquired in the character proofreading processing, and the position information for specifying the position on the balloon 26 in the addition information processing are posted to the proofreading server 201, respectively. On the other hand, in the image proofreading processing, a holder is created on the proofreading server 201 on an image name basis to save each file. At this time, serial numbers (characteristic values) of the proofreading comment bulletin board 21 are put on the file names.

The layer display/non-display button 15 in Fig. 8 makes a display or non-display of the balloon 26 in Fig. 13. If some balloons 26 are scattered over the proofreading document, characters hidden under the balloons 26 cannot be read. In this case, the layer display/non-display button 15 can be used to temporarily cancel the display of the balloons 26.

On the proofreading comment bulletin board 21 for writing the proofreading comment 17, not only new registration and deletion of and reply to the comment are possible, but a file can be attached to the comment. Since the comment once written cannot be revised, a description of a new comment is given by return mail. Further, the person who wrote the comment can delete it, but the other users cannot. This is processing to be performed to protect against tampering and preserve the history.

### (2) Second Embodiment

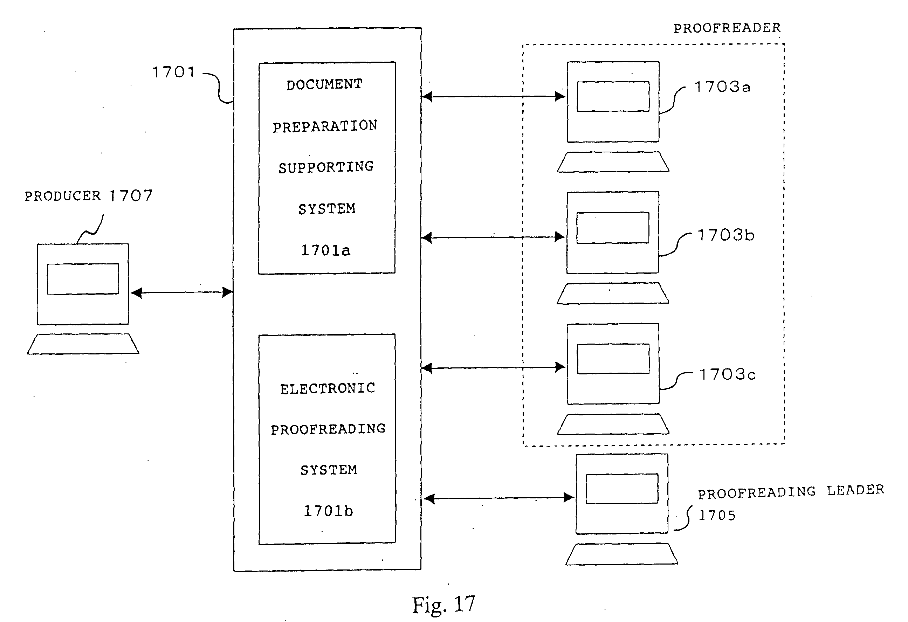

Fig. 17 shows a diagram of the general structure of the second embodiment of the present invention. This embodiment is constituted of a system server 1701, a document preparation supporting system 1701a, an electronic proofreading system 1701b, a producer terminal (hereinbelow called a producer 1707), proofreader terminals (hereinbelow called proofreaders 1703a to 1703c), and a proofreading leader terminal 1705. Each terminal and server are connected through a telecommunication circuit.

### (2-1) Document Preparation supporting system

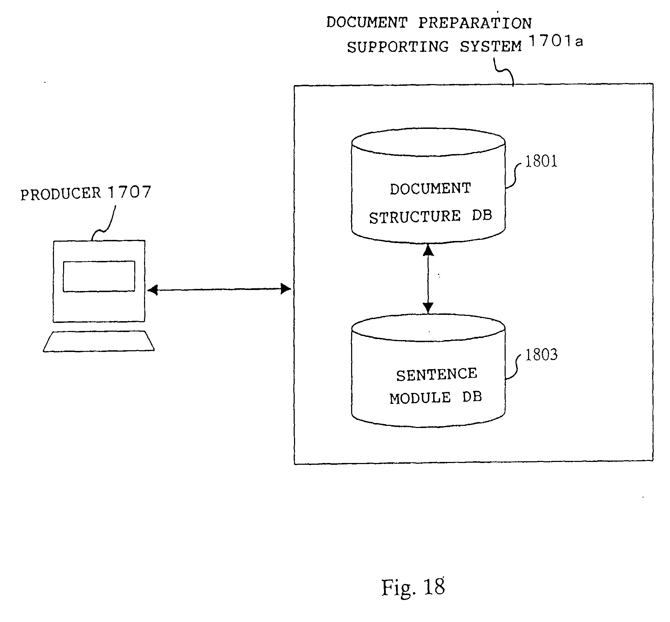

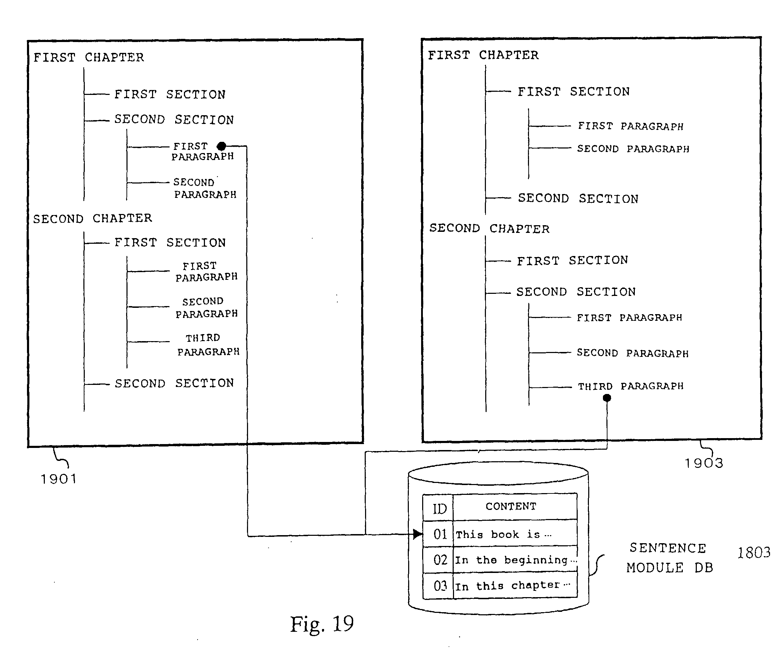

Referring first to Figs. 18 and 19, the document preparation supporting system 1701a will be described.

In the conventional document preparation, when the same sentence (e.g., a caution statement in an instruction manual) is written in multiple documents, the sentence needs to be written (data-inputted) into each document. On the other hand, the document preparation supporting system according to the present invention enables the creation of or makes changes in multiple documents including the document concerned without actual writing (data input) operation by specifying only the position of the sentence in each of the multiple documents.

As shown in Fig. 18, the document preparation supporting system 1701a includes a document structure database 1801 and a sentence module database 1803. In the document structure database 1801, data describing the document structure of each document file is stored. In the sentence module database 1803, sentences to be adopted into each document file are stored on a module basis. The sentences in each module unit are called a sentence module.

### (2-1-1) Change of Shared Sentence Module

When wanting to change a specific portion in a document file (e.g., part of a caution statement or precautions in an instruction manual), the producer 1707 accesses the sentence module database 1803 to read and update a sentence module including the portion. Thus the contents of change are reflected into all the document files having the portion in their document structures. This operation will be specifically described using Fig. 19.

In Fig. 19, three sentence modules are stored in the sentence module database 1803. Each sentence module is given an identification number (ID). In this case, the contents of a sentence module with ID "01" is "The book is ... (The rest is omitted)," the contents of a sentence module with ID "02" is "In the beginning .- (The rest is omitted)," and the contents of a sentence module with ID "03" is "In this chapter... (The rest is omitted."

1901 and 1903 in Fig. 19 show the document structures of document files (document A and document B) represented by data stored in the document structure database 1801. Here, 1901 represents the document structure of the document A and 1903 represents the document structure of the document B.

The document A consists of the first chapter and second chapter, and the first chapter consists of the first section and second section. Further, the second section of the first chapter consists of the first paragraph and second paragraph. The second chapter also consists of the first section and second section. In addition, the first section of the second chapter consists of the first, second, and third paragraphs.

On the other hand, the document B consists of the first chapter and second chapter, and the first chapter consists of the first section and second section. Further, the first section of the first chapter consists of the first paragraph and second paragraph. The second chapter also consists of the first section and second section. In addition, the second section of the second chapter consists of the first, second, and third paragraphs.

In the embodiment, the first paragraph of the second section of the first chapter in the document A shares the sentence module of ID "01" with the third paragraph of the second section of the second chapter in the document B. Therefore, "link information between the first paragraph of the second section of the first chapter in the document A and ID "01" of the sentence module database 1803" and "link information between the third paragraph of the second section of the second chapter in the document B and ID "01" of the sentence module database 1803" are stored in the document structure database 1801.

Thus, a sentence module in the sentence module database 1803 is changed, and the contents of change are reflected into all the document files that have in their document structure data the link information with the sentence module.

### (2-1-2) Creation of Shared Sentence Module

When wanting to crate a specific portion in a document file (e.g., part of a caution statement or precautions in an instruction manual), the producer 1707 accesses the sentence module database 1803 to newly add a sentence module. This operation will be specifically described using Fig. 19.

In Fig. 19, the above-mentioned three sentence modules are stored in the sentence module database 1803. Under the circumstances, if the contents of a sentence module, for example, "This product ... (The rest is omitted)" is added, ID "04" is given and the sentence module is added to the rear end of the sentence module database 1803.

Then, when wanting to share the sentence module of ID "04" between the second paragraph of the second section of the first chapter in the document A and the first paragraph of the second section of the second chapter in the document B, the producer 1707 stores "link information between the second paragraph of the second section of the first chapter in the document A and ID "04" of the sentence module database 1803" and "link information between the first paragraph of the second section of the second chapter in the document B and ID "04" of the sentence module database 1803" in the document structure database 1801.

The sentence module in the sentence module database 1803 is thus changed, and the contents of change are reflected into all the document files that have in their document structure data the link information with the sentence module.

In the embodiment, although the sentence module is shared on a section basis for the sake of simplifying the description, the shared sentence module can also be linked at some midpoint in a section.

### (2-1-3) Advantages of the System

Since only the sentence-describing position is specified for multiple documents, the multiple documents containing the description of the document can be created without actual writing (data input) operation.

### (2-2) Electronic Proofreading System

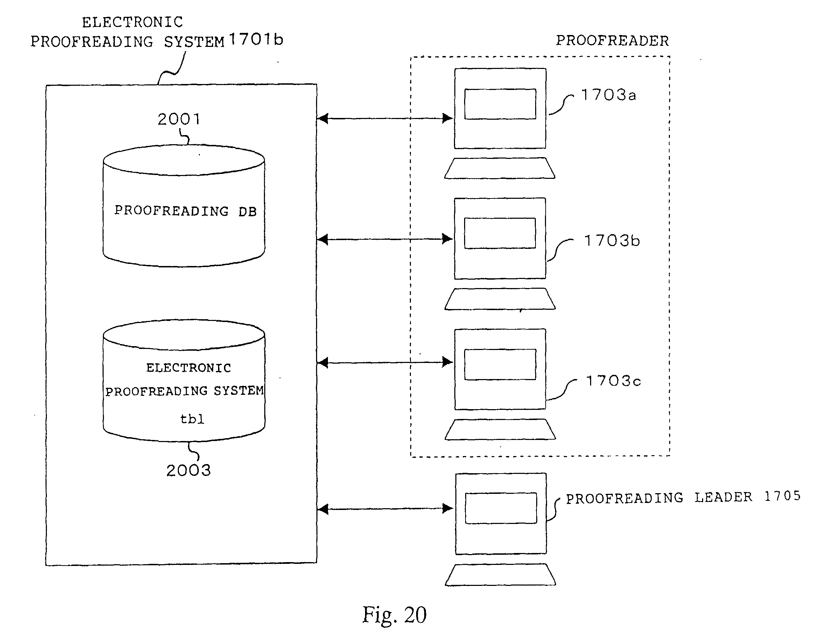

Referring next to Figs. 20 through 25, a description will be made about the electronic proofreading system 1701b.

Conventionally, proofreading data has been exchanged between the producer side and the proofreader side on a book basis. This conventional way has had the drawback of a big time lag between the producer side and the proofreader side.

The electronic proofreading system according to the present invention enables proofreading of proofreading data for each item in a table of contents, and hence an exchange of data between the producer side and the proofreader side on an item basis. Consequently, correction mark information can be acquired more smoothly than the conventional method.

As shown in Fig. 20, the electronic proofreading system 1701b includes a proofreading database 2001 and an electronic proofreading system table 2003. Data describing a document file to be proofread is stored in the proofreading database 2001. Various kinds of tables for realizing features of the system are stored in the electronic proofreading system table 2003.

### (2-2-1) Description of Phrases

Proofreader's Confirmation: Confirmation processing performed by each proofreader on each item in the table of contents. The item in the table of contents confirmed by the proofreader is made read only, and this disables the proofreader from proofreading concerning the item in the table of contents from then on.

Completion of Proofreading: Confirmation processing performed by each proofreader on a project basis. The proofreading-completed project is made read only, and this disables the proofreader from proofreading concerning all the items in the table of contents.

PL Approval: Approval processing performed by the proofreading leader on each item in the table of contents. The item PL-approved is made read only in all the permission levels, and this disables all the users from proofreading concerning the item in the table of contents from then on.

Approval Comment: The proofreading leader organizes proofreading comments inputted by respective proofreaders into a comment (conclusion). This processing is called "approval comment processing."

### (2-2-2) Description of Various Tables

The structures of various tables in the embodiment will be described using Table 1 through Table 5. The following illustrates table names and overviews of the tables.
- Password Management Table (Table 1): Data in a User ID field, a Password field, and a User Name field, and other accompanying information are stored.

| User ID | Password | User Name |
|---|---|---|
| 001 | pwd1111 | user1 |
| 002 | star2222 | user2 |
| 003 | moon3333 | user3 |
| 004 | earth4444 | user4 |
| 005 | sun5555 | user5 |
| 006 | mars6666 | user6 |
| 007 | jptr7777 | user7 |
| . | . | . |
| . | . | . |
| . | . | . |
| . | . | . |
| . | . | . |
| . | . | . |

- Index Table (Table 2): This table consists of a Model ID field for storing a model ID given for each project, and a Table of Contents field and a PL approval field for each model ID. In the table, "0" in the PL Approval field indicates that PL approval is incomplete, while "1" indicates that it has been completed.

| Model ID | Table of Contents | PL Approval |
|---|---|---|
| 1 | 01 | 0 |
| 1 | 02 | 0 |
| 1 | 03 | 1 |
| 1 | 04 | 1 |
| 1 | 05 | 0 |
| 1 | 06 | 0 |
| 1 | 07 | 1 |
| . | . | . |
| . | . | . |
| 1 | 50 | 0 |
| 2 | 01 | 0 |
| 2 | 02 | 0 |
| 2 | 03 | 1 |
| 2 | 04 | 0 |
| 2 | 05 | 0 |
| 2 | 06 | 0 |
| . | . | . |
| . | . | . |

- Correction Mark Management Table (Table 3): This table consists of a Model ID field, a Table of Contents field, a Correction Mark Position field, a Correction Mark Type field, a Comment Index field, a Correction Mark Comment field, and a Confirmation Comment field. The Correction Mark Comment field and the Confirmation Comment field store correction mark comments and confirmation comments as sources of issuing an organized comment, respectively.

| Model ID | Table of Contents | Correction Mark Position | Correction Mark Type | Comment Index | Correction Mark Comment | Confirmation Comment |
|---|---|---|---|---|---|---|
| . | 01 | . | . | . | . | . |
| | | . | . | . | . | . |
| 3 | 05 | Length from Head = 1200 Length of Character String = 6 | Character Structure | 01 | Delete | Confirmed |
| 5 | 06 | 23 to 28 Lines on Page 6 | Area | 02 | Move | Confirmed |
| 3 | 01 | . | . | . | . | . |
| | | . | . | . | . | . |
| 2 | 03 | Page 15 (10,10)(10, 40)(50,10) (50,40) | Rectangle | 03 | Make Change in Illustration | Confirmed |
| 2 | 02 | Page 21 (25,35), 15.00 | Circle | 04 | Make Corner Rounded | Confirmed |
| 1 | 03 | Page 33 (44,60) | Serial Number | 05 | nol | Confirmed |
| . | . | . | . | . | . | . |
| . | . | . | . | . | . | . |
| 1 | 02 | Page 72 (30,60) | Point | 06 | Insert AAA | Confirmed |
| . | . | . | . | . | . | . |
| . | . | . | . | . | . | . |
| . | . | . | . | . | . | . |

- Confirmation Management Table (Table 4): This table consists of a User ID field prepared for each piece of data in the Model ID field, a Confirmed Table of Contents field, and a Proofreading Completion field. When each user issues a proofreader's confirmation, an index number corresponding to the confirmed item in the table of contents are stored in a comma delimited manner. The user ID is linked with the user ID in the Password Management Table (Table 1). In this table, "0" in the Proofreading Completion field indicates that proofreading is incomplete, while "1" indicates that it has been completed.

| Model ID | User ID | Confirmed Table of Contents | Proofreading Completion |
|---|---|---|---|
| 001 | 001 | 02,03,04,05,06 | 0 |
| 001 | 002 | 07,08,09,10,11 | 1 |
| 001 | 003 | 12,13,14,15,16 | 0 |
| . | . | . | . |
| . | . | . | . |
| . | . | . | . |
| . | . | . | . |
| 001 | 007 | 22,23,24,25,26 | 0 |
| 002 | 001 | 02,03,04,05,06 | 0 |
| 002 | 002 | 17,18,19,10,21 | 1 |
| 002 | 003 | 22,23,24,25,26 | 1 |
| . | . | . | . |
| . | . | . | . |
| . | . | . | . |
| . | . | . | . |
| 002 | 007 | 42,43,44,45,46 | 0 |

- Slave Table (Table 5): In this table, a reply comment to a correction mark comment (source comment) and subsequent reply comments are stored. The first column is a Comment Index field, and the second column is a Comment Content field. The comment indexes in the Slave Table are linked with the comment indexes in the Correction Mark Management Table (Table 3). Therefore, for example, comment index "01" is issued as a response to the second record (Correction Mark Comment = Delete) of the Correction Mark Management Table (Table 3), and the contents of the response are stored in the first record (Comment Content = I accepted it) of the Slave Table (Table 5).

| Comment Index | Comment Content |
|---|---|
| 01 | I accepted it. |
| 02 | I'll recommend OO because ΔΔ. |
| 03 | I'm confirming it. |
| 04 | Change it to . |
| 05 | Add further XXX. |
| 06 | I agree with you. |
| . | . |
| . | . |
| . | . |

### (2-2-3) Description of Correction Mark Type

In the embodiment, correction mark positions are indicated with multiple patterns. The following lists these patterns.
- Text: The background of a specified character string is displayed in a predetermined color.
- Area: Start and end lines are selected and displayed in square brackets.
- Rectangle: A selection area is hatched in a rectangular shape.
- Circle: A selection area is hatched in a circular shape.
- Serial Number: A mark with a number is placed at a specified position.
- Point: An arrow mark is placed at the specified position.

### (2-2-4) Exchange of Data in Units of Items in Table of Contents

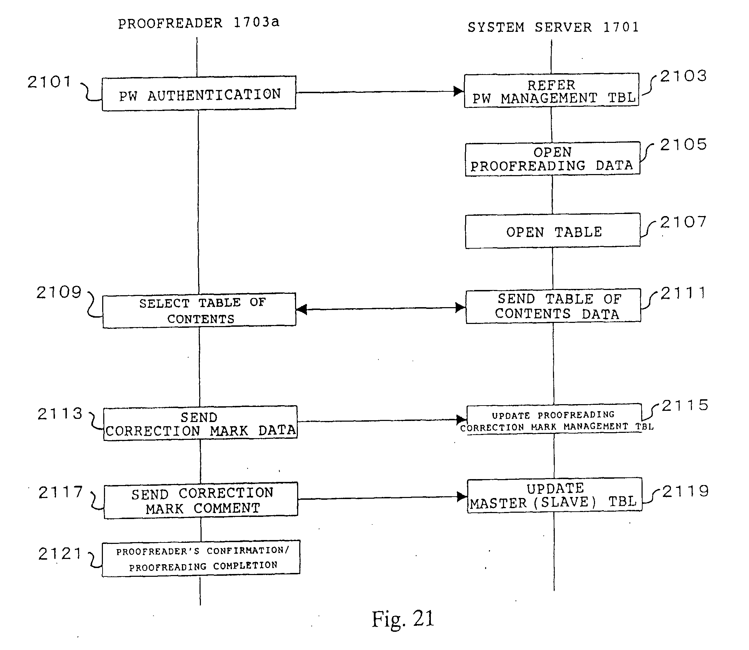

### (2-2-4-1) Description of Operational Flowchart (Fig. 21)

Fig. 21 is an operational flowchart when the proofreader 1703a accesses the system server 1701 to create correction mark information for each item in a table of contents.

When logging in to the electronic proofreading system 1701b, the proofreader 1703a performs processing for password authentication in a first step (S2101). The system server 1701 refers to the Password Management Table (Table 1) to check entered password and user ID against those in the table, and when both accord, it permits the proofreader 1703a to log in (S2103).

Following this step, the system server 1701 opens the proofreading database (S2105) and various tables (Table 1 to Table 6) (S2107). The proofreader 1703 selects a project and an item in its table of contents from a project list and a list of table of contents displayed on the display screen (S2109). On the other hand, the system server 1701 sends the proofreader 1703a proofreading data for the selected item in the table of contents (S2111).

The proofreader 1703a sends the system server 1701 correction mark information to be given to the proofreading data (S2113). The system server 1701 updates the Correction Mark Management Table (Table 3) to add the correction mark information.

Following this step, the proofreader 1703a sends the system server 1701 a correction mark comment to be given to the proofreading data (S2117). The system server 1701 updates the Correction Mark Management Table (Table 3) or the Slave Table (Table 5) to add the contents of the correction mark comment. The correction mark comment is shown on the above-mentioned proofreading comment bulletin board 21.

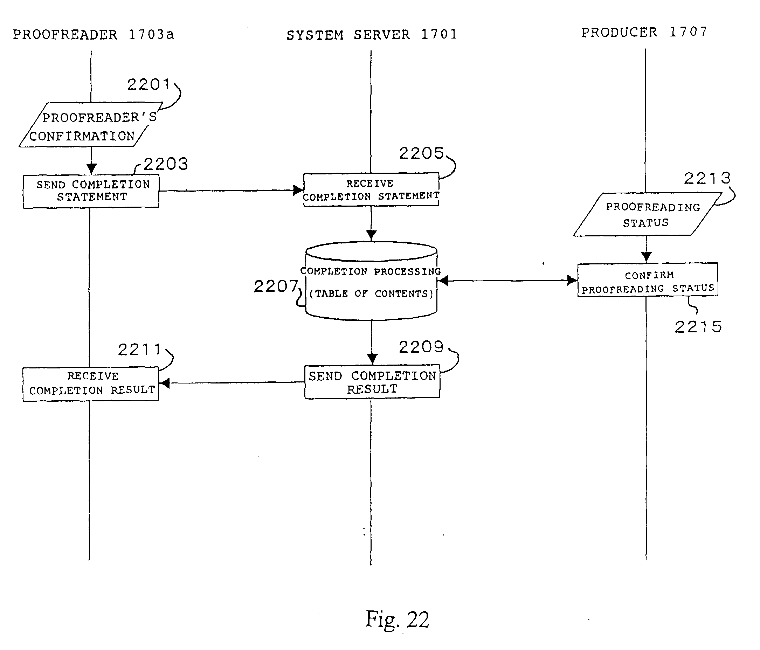

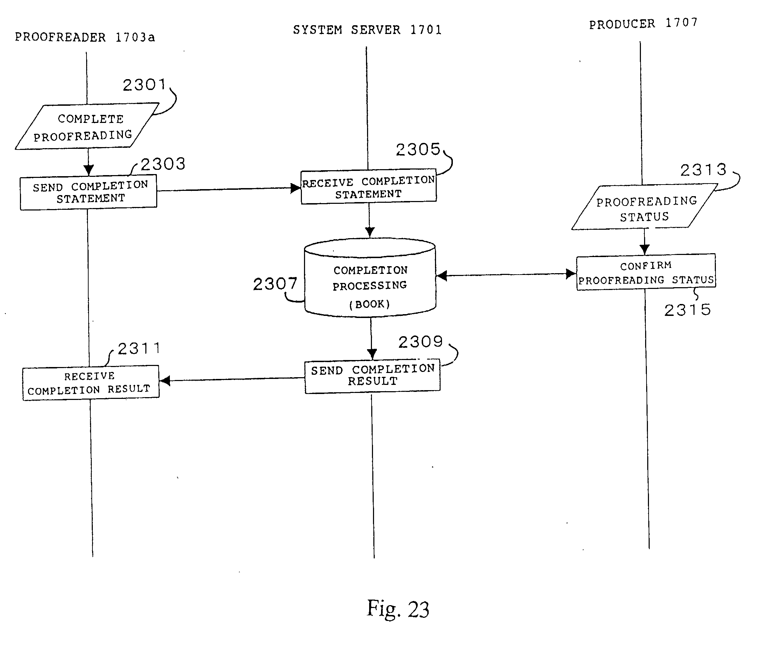

After that, if performing confirmation processing on the item in the table of contents or the project concerned, the proofreader 1703a goes to proofreader's confirmation processing (Fig. 22) and proofreading completion processing (Fig. 23).

### (2-2-4-2) Specific Example

Referring next to Fig. 21, a description will be made of a specific operational example when the proofreader 1703a has user ID = 002 and password = "star2222."

When logging in to the electronic proofreading system 1701b, the proofreader 1703a performs processing for password authentication in a first step (S2101). In this case, the proofreader 1703a enters the user ID = 002 and the password = "star2222."

The system server 1701 refers to the Password Management Table(Table 1) to check the entered password and user ID against those in the table, and when both accord, it permits the proofreader 1703a to log in (S2103).

Following this step, the system server 1701 opens the proofreading database (S2105) and various tables (Table 1 to Table 6) (S2107). The proofreader 1703 selects a project and an item in its table of contents to be proofread from the project list and the list of the table of contents displayed on the display screen (S2109).

If the proofreader 1703a selects an item 07 in the table of contents for a project with model ID = 1, the system server 1701 sends the proofreader 1703a proofreading data on the item 07 for the project (S2111).

The proofreader 1703a sends the system server 1701 correction mark information to be given to the proofreading data (S2113). Since the item 07 in the table of contents corresponds to the record with model ID field value = 1 and table of contents field value = 7 in the Index Table (Table 2), model ID field value = 1 and table of contents field value = 7 are substituted into the Correction Mark Management Table (Table 3). At this time, a comment index is issued and the position of the correction mark information is stored in the Correction Mark Management Table (Table 3). In this case, the position corresponds to the sixtieth character of the thirtieth line on page 72.

Next, the type of correction mark information is stored in the Correction Mark Type field (fourth column) of the same record in the same table. Here, the type is "Point." The proofreader 1703a can write a correction mark comment linking to the "Point." In this case, the contents of comment "Insert AAA" are added to the Proofreading Comment field in the Correction Mark Management Table.

### (2-5-5) Operation of Proofreader's Confirmation Processing

### (2-2-5-1) Description of Operational Flowchart (Fig. 22)

Fig. 22 is an operational flowchart when the proofreader 1703a accesses the system server 1701 to make proofreader's confirmation.

The proofreader uses an operation key on the terminal of the proofreader 1703a to select any one of items in the table of contents for the project that the proofreader 1703a is in charge so as to indicate proofreader's confirmation (S2201), resulting in the transmission of a completion statement from the proofreader 1703a to the system server 1701 (S2203). When receiving the statement (S2205), the system server 1701 acquires from the Index Table (Table 2) the Model ID field value and the Table of Contents field value confirmed by the proofreader 1703a.

Then, the system server 1701 searches the Model ID field of the Confirmation Management Table (Table 4) for the Model ID field value and the User ID, and sets the Table of Contents field value acquired from the Index Table as the Confirmed Table of Contents field value of a record matched as a result of searching. In this case, if there are two or more Table of Contents field values, data on the values are all set in a comma delimited manner.

Following this step, the system server 1701 sends the proofreader 1703a a completion result (S2209). When receiving the completion result (S2211), the proofreader 1703a completes the processing. If wanting to confirm the proofreading status, the producer 1707 (or any other proofreader 1703b or 1703c) receives the proofreading status from the system server 1701 (S2213 to S2215).

### (2-2-5-2) Specific Example

Referring next to Fig. 22, a description will be made of a specific operational example when the proofreader 1703a has user ID = 002 and password = "star2222."

The proofreader 1703a indicates proofreader's confirmation of the item 07 in the table of contents for the project (Model ID = 1) that the proofreader 1703a is in charge (S2201), resulting in the transmission of the completion statement from the proofreader 1703a to the system server 1701 (S2203). When receiving the statement (S2205), the system server 1701 acquires the Model ID field value and the Table of Contents field value from the Index Table (Table 2). Then the system server 1701 searches the Confirmation Management Table (Table 4) for a record with user ID = 002 and model ID =1, and sets the acquired Table of Content field value as the Confirmed Table of Contents field value of the record.

Otherwise, for example if the proofreader's confirmation of the item 08 is indicated, the Table of Contents field value acquired from the Index Table (Table 2) is set in the Confirmed Table of Contents field of the Confirmation Management Table in the comma delimited manner.

### (2-2-6) Proofreading Completion Processing

### (2-2-6-1) Description of Operational Flowchart (Fig. 23)

Fig. 23 is an operational flowchart when the proofreader 1703a accesses the system server 1701 to complete proofreading.

The proofreader uses an operation key on the terminal of the proofreader 1703a to indicate the completion of proofreading on the project that the proofreader is in charge (S2301), resulting in the transmission of a completion statement from the proofreader 1703a to the system server 1701 (S2303). When receiving the statement (S2305), the system server 1701 sets "1" as the Proofreading Completion field value in the Confirmation Management Table (Table 4) (S2307).

Following this step, the system server 1701 sends the proofreader 1703a a completion result (S2309). When receiving the completion result (S2311), the proofreader 1703a completes the processing. If wanting to confirm the proofreading status, the producer 1707 (or any other proofreader 1703b or 1703c) receives the proofreading status from the system server 1701 (S2313 to S2315).

### (2-2-6-2) Specific Example

Referring next to Fig. 23, a description will be made of a specific operational example when the proofreader 1703a has user ID = 002 and password = "star2222."

The proofreader 1703a indicates completion of proofreading on the project (for example, Model ID = 1) that the proofreader 1703a is in charge (S2301), resulting in the transmission of the completion statement from the proofreader 1703a to the system server 1701 (S2303). When receiving the statement (S2305), the system server 1701 searches the Confirmation Management Table (Table 4) for a record with model ID =1 and user ID = 002, and sets "1" as the value of the Proofreading Completion field (fourth column) of the record (2307). The following processing steps are the same as those mentioned above, and the descriptions are omitted.

### (2-2-7) Operation of PL Approval Processing

The proofreading leader 1705 organizes correction mark comments inputted by respective proofreaders 1703 into a comment (conclusion). This processing is called "approval comment processing." The approval comment processing is a function given to only the proofreading leader 1705, and needs to be performed on each comment. The comment thus approved by the proofreading leader 1705 can be revised or unlocked by only the proofreading leader 1705. In other words, the proofreaders 1703 cannot perform any creation processing (reply and deletion) on the comment unless the approval comment is unlocked.

The approval comment processing is thus performed on all the comments that exist in a table of contents. It allows the proofreading leader 1705 to perform processing for PL approval on the table of contents. The table of contents PL-approved is made read only in all the permission levels (proofreading leader, proofreaders, producer).

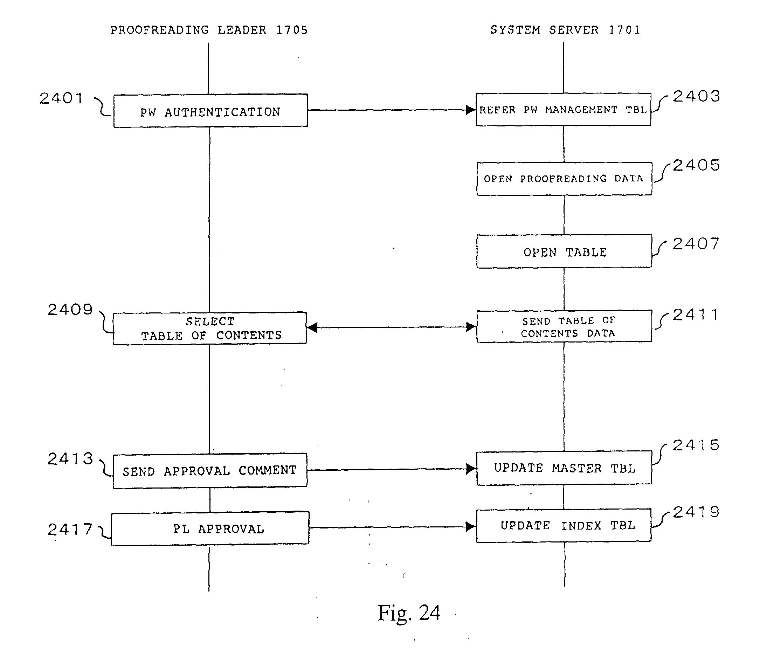

### (2-2-7-1) Description of Operational Flowchart (Fig. 24)

Fig. 24 is an operational flowchart when the proofreading leader 1705 accesses the system server 1701 to perform processing for PL approval.

When logging in to the system server 1701, the proofreading leader 1705 performs processing for password authentication in a first step (S2401). The system server 1701 refers to the Password Management Table (Table 1) to check entered password and user ID against those in the table, and when both accord, it permits the proofreading leader 1705 to log in (S2403).

Following this step, the system server 1701 opens the proofreading database (S2405) and various tables (Table 1 to Table 6) (S2407). The proofreading leader 1705 selects a project and an item in its table of contents to be proofread from the project list and the list of the table of contents displayed on the display screen (S2409). On the other hand, the system server 1701 sends the proofreading leader 1705 proofreading data for the selected item in the table of contents (S2411).

The proofreading leader 1705 sends the system server 1701 an approval comment to be given to the proofreading data (S2413). The system server 1701 updates the Correction Mark Management Table (Table 3) to add the contents of the approval comment. The approval comment is shown on the above-mentioned proofreading comment bulletin board 21.

After that, when the proofreading leader 1705 indicates PL approval for the selected item in the table of contents (S2417), the value of the PL Approval field (third column) of the Index Table (Table 2) is set to "1."

### (2-2-7-2) Specific Example

Referring next to Fig. 24, a description will be made of a specific operational example when the proofreading leader 1705 has user ID = 005 and password = "sun5555."

When logging in to the electronic proofreading system 1701b, the proofreading leader 1705 performs processing for password authentication in a first step (S2401). In this case, the proofreading leader 1705 enters the user ID = 005 and the password = "sun5555."

The system server 1701 refers to the Password Management Table (Table 1) to check the entered password and user ID against those in the table, and when both accord, it permits the proofreading leader 1705 to log in (S2403).

Following this step, the system server 1701 opens the proofreading database (S2405) and various tables (Table 1 to Table 6) (S2407). The proofreading leader 1705 selects an item 03 in a table of contents for a project (for example, model ID = 1) from the project list and the list of the table of contents displayed on the display screen (S2409).

Approval comments from the proofreading leader 1705 is all stored in the Correction Mark Management Table (Table 3). When the proofreading leader 1705 indicates PL approval for the item 03, a signal indicating PL approval for the item 03 is sent from the proofreading leader 1705 to the system server 1701 (S2417). When receiving the signal, the system server 1701 searches the Index Table (Table 2) for a record with model ID = 1 and table of contents = 03, and sets "1" as the value of the PL approval field (third column) of the Index Table (S2419).

After the PL-approved item in the table of contents is delivered to the producer 1707, only the comments in the Correction Mark Management Table (Table 3) are released. Thus, only the correction mark comment and the confirmation comment as the sources of issuing an organized comment are display on the display of the producer 1707.

### (2-2-8) Advantages of the System

(1) In the conventional way of proofreading, data cannot be exchanged until proofs of all the contents of a book are read. On the other hand, the system enables data exchange in units of items in a table of contents, thereby reducing working hours.
(2) The proofreading status of each proofreader can be grasped.
(3) Confirmation processing can be performed on each item in a table of content or each project.
(4) A work flow can be enforced.
(5) The browsing level is limited by the level of permission to protect unnecessary leakage of information.
(6) Confirmation and approval work can improve the accuracy of proofreading.
(7) The persons in charge (proofreaders and project leader) can confirm each other's progress.
(8) The system enables the persons in charge not only to confirm the status of the entire progress, but also to put the status to adjust each other's working speed.
(9) The producer confirms the status of PL approval. It allows the producer to start part of his work prior to completion of proofreading work on the full text of a book.

### (2-3) Data conversion from Document Preparation Supporting System to Electronic Proofreading System

Next, a description will be made of a case when a document file managed in the document preparation supporting system 1701a is converted to a data format capable of being proofread in the electronic proofreading system 1701b. As mentioned above, the document preparation supporting system 1701a creates and manages sentence modules by making a link between the document structure database 1801 and the sentence module database 1803.

On the other hand, it was described that the proofreader 1703a or the proofreading leader 1705 selects a desired item from the list of the table of contents displayed on the display. Thus, in the electronic proofreading system 1701b, data are so structured that a proofreading file for the item selected by the user can be called up.

In the embodiment, the following processing is performed so that a document file created in the document preparation supporting system 1701a can be proofread in the electronic proofreading system 1701b.

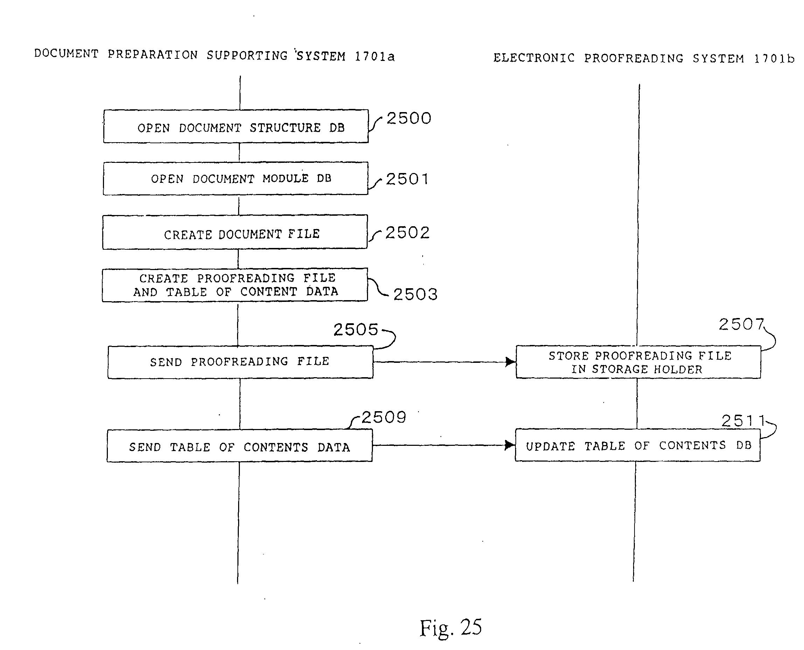

### (2-3-1) Description of Operational Flowchart (Fig. 25)

Fig. 25 shows an operational flowchart of an update of a proofreading file. In Fig. 25, the document preparation supporting system 1701a opens the document structure DB at a fist step (S2500). Then it open the sentence module database (S2501) to create a document file (S2502), and further a proofreading file and table of contents data from the document file created (S2503).

The document preparation supporting system 1701a sends the proofreading file to the electronic proofreading system 1701b (S2505). The electronic proofreading system 1701b stores the received proofreading file in a predetermined proofreading file storage holder (S2507).

Subsequently, the document preparation supporting system 1701a sends the table of contents data to the electronic proofreading system 1701b (S2509). The electronic proofreading system 1701b stores the received table of contents data in a table of contents database (S2511).

### (2-3-2) Description of Table of Contents Data

Table 6 shows a data format of the table of contents data.

| Line No. | Level | Base Line | Table of Contents | File Name |
|---|---|---|---|---|
| 1 | 1 | 0 | a i u e o | File 1 |
| 2 | 2 | 0 | ka ki ku ke ko | File 2 |
| 3 | 1 | 0 | sa shi su se so | File 3 |

First Block (First Column): Place line Nos. (ascending numbers from "1" incremented by one).

Second Block (Second Column): Place a level (hierarchical level in the table of contents). Specifically, place numerical values in such a manner that "1" is set for a chapter, "2" for a section, and "3" for a paragraph.

Third Block (Third Column): Place a base line. If a file stored in the proofreading file storage holder is specified as it is, the base line value is "0." On the other hand, if there is no proofreading file, that is, if an anchor point is specified, "line No. of the original file" is placed.

Fourth Block (Fourth column): Place a text displayed on the table of contents.

Fifth Block (Fifth Column): Place a proofreading file to be called by clicking the table of contents.

The table of contents data and the proofreading file are linked with each other in a manner mentioned above. It allows the proofreader 1703a or the proofreading leader 1705 to select a desired item from the list of the table of contents as shown in step S2109 of Fig. 21 or step S2409 of Fig. 24 to do proofreading on an item basis.

### (2-3-3) Advantages of the System

(1) It saves delivery time of proof paper.
(2) It does not need to create data for proofreading.

### INDUSTRIAL APPLICABILITY

As described above, the following effects can be obtained according to the present invention.

Proofreading through the intranet/Internet is made possible simultaneous proofreading by multiple people, and hence a reduction of proofreading hours. Since all the tasks are performed online in the system, proof sheets do not need circulating as required before. This prevents the proof sheets from getting scattered and lost, resulting in a saving in paper cost. Further, since the proofreading schedule 2 and the proofreading status 3 of each user are managed on the proofreading server 201, it is easy to manage task progress. The proofreading comments 17 inputted by respective proofreaders are also collectively managed in the database of the proofreading server 201. Therefore, it is also possible to manage the proofreading history.

In addition, since the proofreading method is systemized by three functions, namely character proofreading, additional information, and image proofreading, the system can eliminate variations in proofreading instructions from respective proofreaders, and hence make unified proofreading instructions. This makes it possible to lighten the workload for the proofreading manager who organizes the proofreading comments 17.

## Claims

1. A online document proofreading system capable of concurrent proofreading work by multiple operators using Web server technology, **characterized by** comprising:
means for storing and releasing on a server a document to be proofread;
means for managing information related to the proofreading work;
means for releasing proofreading status in response to a request from a registered user; and
means for providing plural levels of access permission to assign a predetermined level of access permission to each registered user.

2. A document proofreading system as set forth in claim 1, **characterized by** further comprising
an electronic bulletin board for allowing the registered users to exchange proofreading information, and
means for automatically delivering e-mail.

3. A document proofreading system as set forth in claim 1 or 2, **characterized by** further comprising
character proofreading means for doing proofreading by dragging a string of proofreading-required characters,
additional information means for doing proofreading by specifying a proofreading-required area, and
image proofreading means for proofreading a proofreading-required image.

4. A document preparation supporting system **characterized by** comprising:
document structure storing means for storing the document structure of each document file,
sentence module storing means for storing sentences used in the document file, and
means for associating said sentence module storing means with said document structure storing means.

5. An electronic proofreading system, which manages a project divided by items in its table of contents as proofreading data, **characterized by** comprising:
means for sending a proofreader the proofreading data for a selected item, and
means for making the proofreading data for the item read only for the proofreader when receiving a signal indicating proofreader's confirmation from the proofreader.

6. An electronic proofreading system as set forth in claim 5, **characterized by** further comprising means for making the project read only for the proofreader when receiving a signal indicating the completion of proofreading from the proofreader.

7. An electronic proofreading system as set forth in claim 5 or 6, **characterized by** further comprising means for making the proofreading data for the item read only for all users when receiving a signal indicating PL approval from a proofreading leader and thus performing an exchange of information in units of items in the table of contents.

8. A data conversion system **characterized by** comprising:
means for creating a proofreading file and table of contents data from a document file created under the direction of a document preparation supporting system;
means for storing the proofreading file in a predetermined location; and
means for storing the table of contents data in a table of contents database.
